Europäisches Patentamt

European Patent Office

Office européen des brevets

(11) Publication number: **0 023 156**
**B1**

(19)

(12) **EUROPEAN PATENT SPECIFICATION**

(45) Date of publication of patent specification: **11.04.84**

(51) Int. Cl.³: **G 01 N 27/28**

(21) Application number: **80302501.4**

(22) Date of filing: **23.07.80**

(54) **Liquid transport device for controlled liquid flow, and liquid testing device and device for determining activity of an ionic analyte including a liquid transport device.**

(30) Priority: **23.07.79 US 59816**
**23.07.79 US 59925**
**10.12.79 US 101662**

(43) Date of publication of application:
**28.01.81 Bulletin 81/4**

(45) Publication of the grant of the patent:
**11.04.84 Bulletin 84/15**

(84) Designated Contracting States:
**AT BE CH DE FR GB IT LI NL SE**

(56) References cited:
**FR - A - 1 444 146**
**US - A - 4 053 381**

**RESEARCH DISCLOSURE, no. 175, November
1978, publication no. 17517 page 22 J.O. PAUL
et al.: "Device for determining ionic activity"
RESEARCH DISCLOSURE, no. 157, June 1977,
publication no. 15767 pages 61-66 "Device and
method for determining ionic activity of
components of liquid drops"**

(73) Proprietor: **EASTMAN KODAK COMPANY**
**343 State Street**
**Rochester New York 14650 (US)**

(72) Inventor: **Columbus, Richard Lewis**
**Kodak Park**
**Rochester New York (US)**
Inventor: **Tidd, Donald George**
**Kodak Park**
**Rochester New York (US)**

(74) Representative: **Pepper, John Herbert et al,
KODAK LIMITED Patent Department P.O. Box 114
190 High Holborn
London WC1V 7EA (GB)**

Courier Press, Leamington Spa, England.

Liquid transport device for controlled liquid flow, and liquid testing device and device for determining activity of an ionic analyte including a liquid transport device

The present invention relates to a liquid testing device and a device for determining activity of an ionic analyte of an aqueous solution, each of which is provided with means for inducing capillary flow of liquid. By determining the activity of an ionic analyte, its concentration may be determined. Such devices for determining ionic activity are valuable quantitative tools in the field of clinical chemistry to determine the existence and cause of certain body illnesses and abnormalities.

European Patent Application 79 302 338.3 (in which the designated states are Austria, Belgium, France, Germany, Holland, Italy, Sweden, Switzerland and United Kingdom) published as EP—A1—14797 on 03.09.80 and having a priority date 25.10.78, describes a liquid transport device for controlled liquid flow. That device includes two opposing surfaces and spacing means spacing the surfaces apart a distance effective to induce capillary flow of liquid introduced between the surfaces and to bound a zone for transport of liquid. The device includes means permitting introduction of liquid into the zone.

It has been found that the flow of liquid within the transport zone can be undesirably rapid. For example, the device may be included in a device for determining activity of an ionic analyte of an aqueous solution. In such a device the transport device provides a bridge between two ion selective electrodes. Two apertures are provided for the introduction of two liquids which contact one another at a junction and each of which contacts a respective one of the electrodes. If liquid introduced at one of the apertures travels too fast it could reach the electrode it is not intended to contact before the other liquid is introduced. This would result in undesired contamination. The problem of undesirably rapid flow of liquid in the transport zone is overcome by the present invention.

Reference is also directed to FR—A— 1444146 which shows a device for studying chemical or biological reactions having a capillary tube and two openings for filling the tube with liquid.

In accordance with the present invention, there is provided a liquid testing device for controlled liquid flow, including two opposing surfaces, spacing means spacing the surfaces apart a distance effective to induce capillary flow of liquid introduced between the surfaces and to bound a zone for transport of liquid, said zone comprising at least two distinct regions at least one of which is a liquid analysis region, and means permitting introduction of liquid into said zone, characterised in that there is provided a gating wall between adjacent said regions, the or each gating wall including a gating aperture and being disposed for delaying liquid flow through the zone between adjacent regions, such delaying including temporary cessation of liquid flow and/or continued liquid flow at a reduced rate.

Advantageously, at least one of the opposing surfaces includes, across at least a portion thereof, a plurality of exposed grooves. The provision of grooves has the advantage of controlling the wave front of flowing liquid.

The or each gating aperture is preferably sized to allow liquid flow to continue at a reduced rate.

The or each gating wall may serve as at least part of the spacing means spacing the surfaces apart. This has the advantage of simplicity of construction.

There may be embodiments wherein the means permitting introduction of liquid into the transport zone include two introduction apertures for the introduction of two liquids discretely at spaced locations in the zone. In such embodiments it is advantageous if the gating means includes two walls, each extending across the transport zone and each having a gating aperture therein.

In the latter instance, the two walls may bound three regions, the liquids being introducible discretely into a first and third of said regions, respectively. The second region is located between the first and third regions whereby a path between the two introduction apertures extends through both of the gating apertures. This has the advantage that the flows of both liquids into the second region are restricted.

An ion-selective electrode may be in communication with the liquid analysis region.

In accordance with the present invention there is also provided a device for determining activity of an ionic analyte of an aqueous solution, including a pair of solid electrodes each constructed to develop an electrical potential that is proportional in magnitude to the amount of analyte activity present in a solution contacting it, and a liquid transport device which includes two opposing surfaces, spacing means spacing the surfaces apart a distance effective to induce capillary flow of a liquid introduced between the surfaces and to bound a zone for transport of liquid and means permitting introduction of liquid into said zone at two spaced-apart locations, characterised in that the liquid transport device bridges the two electrodes, that the electrodes are located one adjacent each of said locations and that there is provided a gating wall, said wall including a gating aperture and being disposed for delaying liquid flow through the zone between said locations, such delaying including temporary cessation of liquid flow and/or continued liquid flow at a reduced rate.

This device has the advantage that the chance of contaminating one electrode with a liquid intended to contact the other electrode, which contamination might otherwise occur upon delay in applying the second liquid, is avoided.

Embodiments of the present invention will now be described by way of example, with reference to the accompanying drawings, in which:

Fig. 1 is an isometric view of an ion-selective electrode (hereinafter referred to as "ISE") test device:

Fig. 2 is a sectional view taken generally along the vertical plane of line II—II of Fig. 1;

Fig. 3 is a plan view of just the ion bridge member of an ISE test device constructed in accordance with the present invention;

Fig. 4 is a sectional view taken generally along the vertical plane of line IV—IV of Fig. 3;

Fig. 5 is a fragmentary plan view similar to that of Fig. 3, but illustrating an alternative embodiment;

Fig. 6 is a fragmentary sectional view similar to that of Fig. 4 but illustrating yet another embodiment of the invention; and

Fig. 7 is a plan view similar to that of Fig. 3 but illustrating still another embodiment.

The embodiments hereinafter described are directed specifically to ion bridges in devices which potentiometrically measure ionic analytes using ISE's. However, the present invention can be applied to any liquid transport device which relies upon capillary flow between two opposing surfaces to distribute a liquid.

The embodiments of the present invention are capable of measuring the activity of various ionic analytes, commonly called electrolytes, found in aqueous solutions. From this measurement the corresponding concentration of the analyte is calculated by known methods using a calibrated relationship.

The embodiments hereinafter described refer to whole blood and blood serum as the preferred test solution. However, any electrolyte of an aqueous solution can be so measured. For example, blood plasma, urine and spinal fluid can be so analyzed.

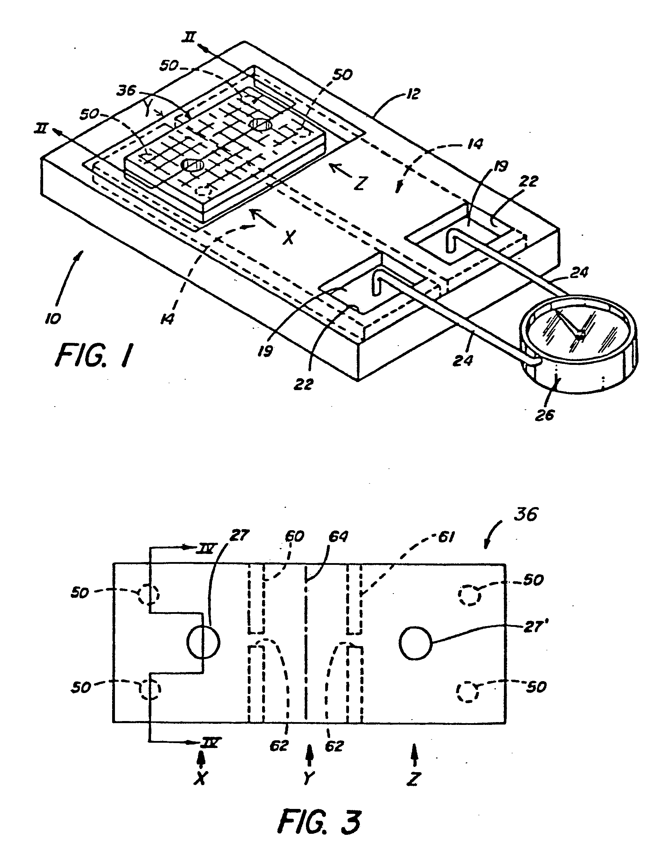

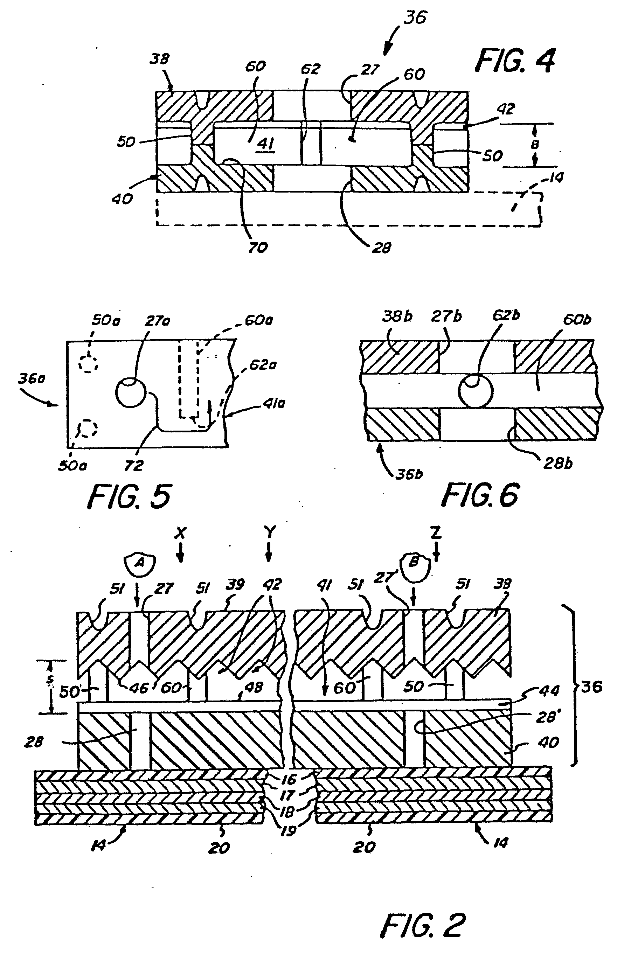

Preferably the device of the present invention includes (Fig. 1) an electrically insulative frame 12 which mounts a spaced-apart pair of preferably solid ion-selective electrodes 14 spanned by a flow control bridge 36. As described in U.S. Patent No. 4,053,381, each ISE is a generally flat multilayered element comprising adjacent layers 16—20 (Fig. 2). When blood serum from a drop A or B (Fig. 2) makes contact with layer 16 which is an ion-selective membrane, the ion $Z^{\oplus}$ of choice, which is an analyte of the blood serum, is carried, or otherwise penetrates, to the underlying layers 17—18. In these layers 17—18, an electrical potential is generated proportional to the activity of that particular ion. Layer 17, for example, can be a dried hydrophilic binder containing the salt $Z^{\oplus}X^{\ominus}$. Layer 18 in such instances is the $X^{\ominus}$ salt of electrically con-

ductive metal $M^{\oplus}$, and metal $M^{\circ}$ forms layer 19. Because layer 18 is an electrically conductive layer, a potential can be detected by electrometer 26 (Fig. 1) via probes 24 which penetrate into contact with layer 19 at windows 22. Any difference in these potentials due to two different ion activities of two liquids A and B, one an unknown and one a reference having a known concentration of $Z^{\oplus}$, is registered as a difference potential on the electrometer. This reading is then converted into a measure of concentration of the ionic analyte $Z^{\oplus}$.

Bridge 36 is used to provide means for directing the liquid flow from drops A and B to ISE's 14 and to each other (Fig. 2). The bridge 36 ensures that an electrical circuit is completed and the potentials generated in the ISE's will register on electrometer 26. The bridge comprises two members 38 and 40 spaced apart in the manner described below. The flow of liquid from the drops A and B to ISE's 14 is guided by aligned pairs of cylindrical apertures 27, 27' and 28, 28' in members 38 and 40, respectively (Fig. 2). Apertures 27, 27' extend inwardly from exterior surface 39 of member 38. Apertures 28, 28' are positioned above and adjacent to the respective ISE 14 to be contacted by the liquid.

Any convenient drop dispenser can supply the drops, either in free-falling form or as drops touched-off from a platform. Preferably, the drops are dispensed simultaneously to ensure proper junction formation, as described below.

Members 38 and 40 have opposing internal surfaces spaced apart a distance s (Fig. 2) effective to induce capillary flow of liquid between the surfaces and to define a zone 41 of intended liquid transport or flow. Each surface can be either smooth, or, as shown, bear a pattern of exposed grooves 42 and 44, which can be for example sawtooth in shape. If grooves are used, grooves 44 preferably extend from at least the vicinity of aperture 28 to at least the vicinity of aperture 28', and are preferably substantially parallel and straight. Grooves 42 are superimposed over grooves 44 preferably at a positive, that is, non-zero, angle alpha. Most preferably, alpha is about 90°, and the grooves 42 are also substantially parallel and straight.

Grooves 42 and 44 and the ridges 46 and 48 which bound them have a width and thickness, respectively, which can be varied depending on design choices.

The distance s is maintained by four studs 50 which extend from the surface having grooves 42 to the surface having grooves 44. Studs 50 are of small cross-sectional diameter, compared to the overall dimensions of zone 41. As such, they do not significantly impede flow of liquid within zone 41. Preferably, studs 50 are formed by ultrasonically welding the two opposed surfaces of members 38 and 40 together, at the locations of the studs 50, creating (Fig. 2) depressions 51 in exterior surface 39.

Thus, liquids in simultaneously applied drops A and B not only penetrate apertures 28 and 28' to contact ISE's 14. They also form two advancing wave fronts in zone 41. If grooves 42 and ridges 46 are linear, so are the wave fronts. If ridges 46 are parallel throughout bridge 36, the wave fronts when they meet form a straight line junction about midway between apertures 27 and 27', of minimum width.

Departures from the linear, parallel pattern of grooves described above also are effective, it being noted however that the junction between the two liquids will have in those cases a greater width and perhaps a non-linear shape, resulting in more intermixing of liquids A and B.

Zone 41 has three discrete regions X, Y and Z (Fig. 1). Each of these regions provides liquid transport, and preferably also liquid manipulation beyond simple transport. As used herein, "manipulation" refers to a step or reaction, other than transport between the opposed surfaces, which can be chemical, physical, or electrical in nature, that takes place in or to the liquid, e.g., a liquid analysis step such as occurs when the liquid flows into contact with an ISE that detects a specific ionic activity of the liquid. Thus regions X and Z are substantially identical, and constitute the region of liquid analysis wherein the two liquids flow through apertures 28 and 28', respectively (Fig. 2) to contact the ISE's 14 that are in communication with zone 41 by reason of apertures 28, 28'. Region Y however is different in that it is the region of the junction of the two wave fronts of liquids from the drops A and B. It is across this junction that ion exchange, an electro-physical phenomenon, occurs to permit the completion of the electrical circuit formed by ISE's 14 now in contact with drops A and B, and electrometer 26.

Referring now to Figs. 3 and 4, between at least regions X and Y and/or Y and Z, there is provided means for delaying capillary transport of liquid from region X or Z into region Y. "Delaying", as used herein describes a generic condition that includes both the temporary cessation of flow as well as continued flow at a reduced rate. Whichever occurs is a function of the configuration of the delaying means and of the volume of the liquid located "behind" the delaying means and constituting an equivalent head of pressure. If the delaying means is the appropriate configuration, even excess liquid beyond that capable of filling the entire transport zone will not cause the meniscus to advance beyond the delaying means. Preferably, such delaying means are formed as at least one and preferably two walls 60 and 61 extending integrally from and between the opposed surfaces of members 38 and 40. As in the case of studs 50, walls 60 and 61 preferably function to space apart the opposed surfaces by distance s (Fig. 4) and are formed by ultrasonically welding the two surfaces together at appropriate places between apertures 27, 27'. If the apertures 27, 27' are spaced apart lengthwise of zone 41, as shown in Fig. 3, each wall 60 or 61 extends the major portion of the width of zone 41. Preferably it extends the entire width except for a gating aperture 62 formed in each wall by the ultrasonic welding pattern. Such aperture 62 can be located anywhere in walls 60 and 61. The preferred location is in that portion of the wall directly interposed in the path of liquid flow that would otherwise occur from aperture 27 to aperture 27', as shown.

The two gating apertures 62 in walls 60 and 61 serve to markedly reduce the rate of flow in zone 41 of liquids from the two drops deposited in apertures 27 and 27' at regions X and Z (Fig. 3). The formation of the junction between liquid from the two drops, designated by a broken line 64 in region Y, is thus delayed. Thus there is little likelihood that liquid from one or the other of the two drops will inadvertently race over to the other aperture prior to the second drop spreading outwardly from its access aperture. Also, liquid from drop A is restricted from flowing so rapidly that it proceeds all the way from aperture 27 to aperture 28' prior to liquid from drop B spreading from aperture 27'. There is however no change in the flow of the liquids through apertures 27, 27' or apertures 28 and 28', or to their respective ISE's 14, shown in phantom in Fig. 4.

In Fig. 4, only one of the opposed surfaces is shown as containing grooves 42, the other being smooth as at 70. This is an alternative. Alternatively, both surfaces can be grooved, as in Fig. 2, or both can be smooth.

Any material can be used to form the bridge members, and thus the gating walls, but preferably they are selected from plastics that can be ultrasonically welded. Examples include acetates such as cellulose triacetate, and the like, polystyrene, etc.

An ultrasonic horn can be used to form the gating walls 60, 61. Such horns are driven, as is well known, by a transducer which translates electrical signals into high frequency vibrations. The edge of the horn in contact with the bridge 36 should have the shape desired for the gating walls. Typically, ultrasonic energy of 60 to 80 watts can be applied by such a device for about 40 to 50 milliseconds when using the above-noted materials.

It will be appreciated that walls 60 and 61, because of their considerable extension across the width of zone 41, serve to more adequately maintain the preferably planar condition of members 38 and 40 than can be achieved by studs 50 alone.

Preferably, the zone 41 intended for liquid transport is a void. This term is used herein to mean, a zone void of other solids or liquids, or which contains such other solids or liquids in an amount less than 50% of the total volume of the zone. Fibers can be included in regions X, Y or Z separately, extending in the direction of liquid flow, provided the amount thereof is less than 50% of the total volume of the transport zone.

In another embodiment, region Y of Fig. 3 can have applied to it during manufacture, between the opposing walls 60 and 61, and on either or both of the opposite surfaces 42 or 70 (Fig. 4) a coating of an equitransferent salt of the type described in U.S. Patent No. 4,053,381. The salt redissolves in the presence of the two liquids added to apertures 27 and 27', and forms a salt solution that acts to suppress junction potentials that otherwise form when the two liquids meet in region Y.

Although regions X and Z are disclosed as potentiometric liquid analysis regions, it will be apparent that other kinds of analysis regions can be used in other environments, for example, radiometric analysis regions. Also, a region can be used to permit a chemical reaction or one of a plurality of sequential chemical reactions, such reactions requiring, for example, a time delay as provided by the delaying means that is disposed between the chemical reaction region and the region of liquid transport that is upstream thereof. Still further, two adjacent regions separated by the delaying means can both be liquid analysis regions, one of which permits analysis prior to the other, e.g., as in the determination of rate reactions.

In the embodiment partially illustrated in Fig. 5, the gating wall is formed with the gating aperture at one side of the transport zone. Parts similar to those previously described bear the same reference numeral to which the distinguishing suffix "a" is appended. Bridge 36a has liquid access aperture 27a and studs 50a separating the two members of the bridge, as in the previously described embodiment. However, wall 60a is formed with gating aperture 62a located at the side of the bridge. In such an arrangement, liquid flow follows arrow 72. This location of the gating aperture still permits zone 41a to fill with the two liquids with a junction (not shown) between them.

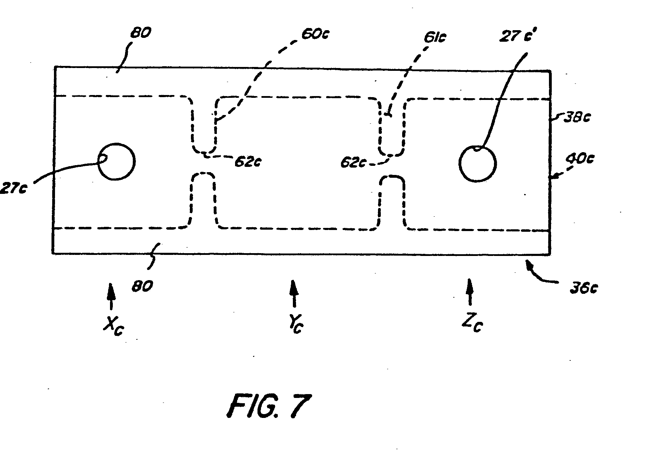

The gating aperture can be any shape and size, so long as its configuration will allow liquid flow through or around the gating wall at a restricted rate that is less than the rate that would occur in the absence of the gating wall. In the embodiment partially illustrated in Fig. 6, parts similar to those previously described bear the same reference numeral to which the distinguishing suffix "b" is appended. In Fig. 6, gating aperture 62b in wall 60b of bridge 36b is circular.

A preferred width, or in the case of aperture 62b, the diameter, of the aperture is about 0.2 to about 1 mm.

In the embodiment illustrated in Fig. 7, the gating walls have been extended to completely enclose the side portions of the bridge. Parts similar to those previously described bear the same reference numeral to which the distinguishing suffix "c" has been added. Thus, bridge 36c is provided with gating walls 60c and 61c disposed between apertures 27c and 27c' and between regions Xc, Yc and Zc, Yc, respectively. These walls join together and space apart members 38c and 40c along the entire side portions 80 of the bridge. Apertures 62c are provided in the centre portion of walls 60c and 61c to allow a restricted rate of flow between the apertures 27c and 27c'.

## Claims

1. A liquid testing device for controlled liquid flow, including two opposing surfaces, spacing means (50, 60, 61; 50a, 60a; 60b; 60c, 61c) spacing the surfaces apart a distance (S) effective to induce capillary flow of liquid introduced between the surfaces and to bound a zone for transport of liquid, said zone comprising at least two distinct regions (X, Y, Z; Xc, Yc, Zc) at least one of which is a liquid analysis region, and means permitting introduction of liquid into said zone, characterised in that there is provided a gating wall (60, 61; 60a; 60b; 60c, 61c) between adjacent said regions, the or each gating wall (60, 61; 60a; 60b; 60c, 61c) including a gating aperture (62; 62a; 62b; 62c) and being disposed for delaying liquid flow through the zone between adjacent regions (X, Y, Z; Xc, Yc, Zc), such delaying including temporary cessation of liquid flow and/or continued liquid flow at a reduced rate.

2. A liquid testing device according to claim 1, characterised in that at least one of the opposing surfaces includes, across at least a portion thereof, a plurality of exposed grooves (42, 44).

3. A liquid testing device according to claim 1 or 2, characterised in that the or each gating wall (60, 61; 60a; 60b; 60c, 61c) serves as at least part of said spacing means.

4. A liquid testing device according to claim 1, 2 or 3 characterised in that the or each gating aperture (62; 62a; 62b; 62c) is sized to allow liquid flow to continue at a reduced rate.

5. A liquid testing device according to any one of the preceding claims, wherein the means permitting introduction of liquid into said zone includes two introduction apertures (27, 27'; 27a; 27b; 27c, 27c') for the introduction of two liquids discretely at spaced locations in the zone, characterised by two gating walls (60, 61; 60a; 60b; 60c, 61c), each extending across the transport zone and each having a gating aperture (62; 62a; 62b; 62c) therein.

6. A liquid testing device according to claim 5, characterised in that the walls (60, 61; 60a; 60b; 60c, 61c) bound three regions (X, Y, Z; Xc, Yc, Zc), the liquids being introducible discretely into a first (X; Xc) and third (Z; Zc) of said regions respectively, and the second region (Y; Yc) being located between the first and third regions whereby a path between the two introduction apertures (27, 27'; 27a; 27b; 27c, 27c') extends through both of the gating apertures (62; 62a; 62b; 62c).

7. A liquid testing device according to any one of the preceding claims, characterised by an ion-selective electrode (14) in liquid communication with the liquid analysis region.

8. A device for determining activity of an ionic analyte of an aqueous solution, including a pair of solid electrodes (14) each constructed to develop an electrical potential that is proportional in magnitude to the amount of analyte activity present in a solution contacting it, and a liquid transport device which includes two opposing surfaces, spacing means (50, 60, 61; 50a, 60a; 60b; 60c, 61c) spacing the surfaces apart a distance (S) effective to induce capillary flow of a liquid introduced between the surfaces and to bound a zone for transport of liquid and means permitting introduction of liquid into said zone at two spaced-part locations, characterised in that the liquid transport device bridges the two electrodes (14), that the electrodes (14) are located one adjacent each of said locations (27, 27'; 27a; 27b; 27c, 27c') and that there is provided a gating wall (60, 61; 60a; 60b; 60c, 61c), said wall including a gating aperture (62; 62a; 62b; 62c) and being disposed for delaying liquid flow through the zone between said locations, such delaying including temporary cessation of liquid flow and/or continued liquid flow at a reduced rate.

**Patentansprüche**

1. Flüssigkeitsanalysevorrichtung zur Erzeugung einer gesteuerten Flüssigkeitsströmung, mit zwei einander gegenüberliegenden Flächen, mit Abstandsmitteln (50, 60, 61; 50a, 60a; 60b; 60c, 61c), welche die beiden Flächen in einem solchen Abstand (s) voneinander halten, daß dadurch ein Kapillarströmung der zwischen die Flächen eingeleiteten Flüssigkeit erzeugt und eine Zone für den Transport von Flüssigkeit begrenzt wird, wobei die Zone mindestens zwei genau unterscheidbare Bereiche (X, Y, Z; Xc, Yc, Zc) aufweist, von denen mindestens ein Bereich zur Flüssigkeitsanalyse dient, und mit Mitteln, die das Einleiten von Flüssigkeit in diese Zone ermöglichen, dadurch gekennzeichnet, daß zwischen diesen einander benachbarten Bereichen eine eine Engstelle bildende Wand (60, 61; 60a; 60b; 60c, 61c) vorgesehen ist, wobei die oder jede Wand (60, 61; 60a; 60b; 60c, 61c) eine Öffnung (62; 62a; 62b; 62c) aufweist und so angeordnet ist, daß sie die Strömung der Flüssigkeit durch die Zone zwischen benachbarten Bereichen (X, Y, Z; Xc, Yc, Zc) verlangsamt, und wobei es sich bei dieser Verlangsamung auch um einen vorübergehenden Stillstand der Flüssigkeitsströmung und/oder um ein Weiterströmen der Flüssigkeit mit verminderter Geschwindigkeit handeln kann.

2. Flüssigkeitsanalysevorrichtung nach Anspruch 1, dadurch gekennzeichnet, daß mindestens eine der einander gegenüberliegenden Flächen auf mindestens einem Teil ihrer Gesamtfläche mehrere freiliegende Rillen (42, 44) aufweist.

3. Flüssigkeitsanalysevorrichtung nach Anspruch 1 oder 2, dadurch gekennzeichnet, daß die oder jede Wand (60, 61; 60a; 60b; 60c, 61c) mindestens einen Teil der Abstandsmittel bildet.

4. Flussigkeitsanalysevorrichtung nach Anspruch 1, 2 oder 3, dadurch gekennzeichnet, daß die oder jede Öffnung (62; 62a; 62b; 62c) so groß ist, daß sie ein Weiterströmen der Flüssigkeit mit verminderter Geschwindigkeit zuläßt.

5. Flüssigkeitsanalysevorrichtung nach einem der vorhergehenden Ansprüche worin die Mittel, die das Einleiten von Flüssigkeit in die Zone ermöglichen, zwei Einlaßöffnungen (27, 27'; 27a; 27b; 27c, 27c') zum Einleiten von zwei Flüssigkeiten aufweisen, die getrennt und an im Abstand voneinander liegenden Stellen in der Zone angeordnet sind, gekennzeichnet durch zwei Wände (60, 61; 60a; 60b; 60c, 61c), die sich beide durch die Transportzone erstrecken und jeweils eine Öffnung (62; 62a; 62b; 62c) besitzen.

6. Flüssigkeitsanalysevorrichtung nach Anspruch 5, dadurch gekennzeichnet, daß die Wände (60, 61; 60a; 60b; 60c, 61c) drei Breiche (X, Y, Z; Xc, Yc, Zc) begrenzen, wobei die Flüssigkeiten getrennt in einen ersten (X; Xc) bzw. dritten (Z; Zc) von diesen Bereichen einleitbar sind und der zweite Bereich (Y; Yc) zwischen dem ersten und dem dritten Bereich angeordnet ist, wodurch sich die Bahn zwischen den beiden Einlaßöffnungen (27, 27'; 27a; 27b; 27c, 27c') durch beide Öffnungen (62; 62a; 62b; 62c) hindurch erstreckt.

7. Flüssigkeitsanalysevorrichtung nach einem der vorhergehenden Ansprüche, gekennzeichnet durch eine ionenselektive Elektrode (14), welche über die Flüssigkeit mit dem Flüssigkeitsanalysebereich in Verbindung steht.

8. Vorrichtung zum Bestimmen der Aktivität einer ionischen Analysesubstanz einer wässrigen Lösung, mit zwei Festelektroden (14), die jeweils so ausgebildet sind, daß sie ein elektrisches Potential entwickeln, dessen Höhe dem Ausmaß der Aktivität der in einer die Elektroden berührenden Lösung vorhandenen Analysesubstanz proportional ist, mit einer Flüssigkeitstransportvorrichtung mit zwei einander gegenüberliegenden Flächen, mit Abstandsmitteln (50, 60, 61; 50a, 60a; 60b; 60c, 61c), welche die beiden Flächen in einem solchen Abstand (s) voneinander halten, daß in der zwischen den Flächen eingeführten Flüssigkeit eine Kapillarströmung erzeugt und eine Zone für den Flüssigkeitstransport begrenzt wird, sowie mit Mitteln, die an zwei voneinander getrennten Stellen das Einleiten von Flüssigkeit in diese Zone ermöglichen, dadurch gekennzeichnet, daß die Flüssigkeitstransportvorrichtung die zwei Elektroden (14) überbrückt, daß die Elektroden (14) jeweils benachbart den Stellen (27, 27'; 27a; 27b; 27c, 27c') angeordnet sind und daß eine eine Engstelle bildende Wand (60, 61; 60a; 60b; 60c, 61c) vorgesehen ist, die eine Öffnung (62; 62a; 62b; 62c) aufweist und so angeordnet ist, daß sie die Strömung der Flüssigkeit durch die Zone zwischen den Stellen verlangsamt, wobei es sich bei der Verlangsamung um einen vorübergehenden Stillstand der Strömung und/oder um ein Weiterströmen der Flüssigkeit mit verminderter Geschwindigkeit handeln kann.

## Revendications

1. Dispositif d'essai de liquide pour écoulement maîtrisé de liquide, comprenant deux surfaces en vis-à-vis, des moyens d'espacement (50, 60, 61; 50a, 60a; 60b; 60c, 61c) séparant les surfaces d'une distance (S) propre à induire un écoulement capillaire de liquide introduit entre les surfaces et à délimiter une zone de déplacement de liquide, la dite zone comprenant au moins deux régions distinctes (X, Y, Z; Xc, Yc, Zc) dont l'une au moins est une région d'analyse de liquide, et des moyens permettant l'introduction de liquide dans la dite zone caractérisé en ce qu'une paroi régulatrice (60, 61; 60a; 60b; 60c, 61c) est disposée entre les dites régions voisines, la ou chaque paroi régulatrice (60, 61; 60a; 60b; 60c, 61c) comprenant une ouverture régulatrice (62; 62a; 62b; 62c) et étant disposée pour retarder l'écoulement de liquide au travers de la zone entre les régions voisines (X, Y, Z; Xc, Yc, Zc), ce retard consistant en une cession momentanée de l'écoulement de liquide et/ou en un ralentissement de l'écoulement liquide continu.

2. Dispositif d'essai de liquide conforme à la revendication 1, caractérisé en ce qu'au moins une des surfaces en vis-à-vis comprend, au travers d'au moins une partie, des sillons apparents (42, 44).

3. Dispositif d'essai de liquide conforme à la revendication 1 ou 2, caractérisé en ce que la ou chaque paroi régulatrice (60, 61; 60a; 60b; 60c, 61c) sert au moins en partie de moyen d'espacement.

4. Dispositif d'essai de liquide conforme à la revendication 1, 2 ou 3, caractérisé en ce que la ou chaque ouverture régulatrice (62; 62a; 62b; 62c) a une dimension qui autorise la poursuite d'un écoulement de liquide ralenti.

5. Dispositif d'essai de liquide conforme à l'une quelconque des revendications précédentes, où les moyens permettant l'introduction de liquide dans la dite zone comprennent deux orifices d'introduction (27, 27'; 27a; 27b; 27c, 27c') pour introduire discrètement deux liquides en des endroits séparés dans la zone, caractérisé par deux parois régulatrices (60, 61; 60a; 60b; 60c, 61c), s'étendant, chacune, au travers de la zone de déplacement et comprenant, chacune, une ouverture régulatrice (62; 62a; 62b; 62c).

6. Dispositif d'essai de liquide conforme à la revendication 5, caractérisé en ce que les parois (60, 61; 60a; 60b; 60c, 61c) délimitent trois régions (X, Y, Z; Xc, Yc, Zc), les liquides étant aptes à être introduits discrètement dans la première (X; Xc) et la troisième (Z; Zc) de ces régions respectivement, et la deuxième région (Y; Yc) étant disposée entre les première et troisième régions, pour établir une liaison entre les deux orifices d'introduction (27, 27'; 27a; 27b; 27c, 27c') au travers des deux overtures régulatrices (62; 62a; 62b; 62c).

7. Dispositif d'essai de liquide conforme à l'une quelconque des revendications précédentes, caractérisé par une électrode (14) sélective d'ions mise en liaison par voie liquide avec la région d'analyse de liquide de manière à permettre à un liquide de s'écouler.

8. Dispositif pour déterminer l'activité d'un constituant ionique d'une solution aqueuse, comprenant un couple d'électrodes (14) non creuses, chacune conformée pour établir un potentiel électrique dont l'amplitude est proportionnelle à l'importance de l'activité du constituant présent dans la solution qui est à son contact, et un dispositif de déplacement de liquide qui comprend deux surfaces en vis-à-vis, des moyens d'espacement (50, 60, 61; 50a, 60a; 60b; 60c, 61c) séparant les surfaces d'une distance (S) propre à induire en écoulement capillaire d'un liquide introduit entre les surfaces et à délimiter une zone de déplacement de liquide, et des moyens permettant l'introduction de liquide dans cette zone en deux endroits séparés, caractérisé en ce que le dispositif de déplacement de liquide forme un pont reliant les deux électrodes (14), en ce que les électrodes (14) sont disposées chacune au voisinage de chacun de ces endroits (27, 27'; 27a; 27b; 27c, 27c') et en ce qu'il est prévu une paroi régulatrice (60, 61; 60a; 60b; 60c, 61c), cette, paroi comprenant une ouverture régulatrice (62; 62a; 62b; 62c) et étant disposée pour retarder l'écoulement de liquide à travers la zone entre ces endroits, ce retard consistant en une cessation momentanée de l'écoulement de liquide et/ou en un ralentissement de l'écoulement liquide continu.

FIG. 1

FIG. 3

FIG. 4

FIG. 5

FIG. 6

FIG. 2

**FIG. 7**